# EUROPEAN PATENT APPLICATION

(11) **EP 1 463 313 A2**
(43) Date of publication of application: **29.09.2004**
(21) Application number: 04002475.4
(22) Date of filing: 04.02.2004
(51) Int. Cl.: H04N 5/775

(54) **Television receiver with optical disk reproducing function**

(30) Priority: 10.02.2003 JP 2003000599 U
(71) Applicant: Funai Electric Co., Ltd., Daito-shi, Osaka (JP)
(72) Inventor: Nishigaki, Hiroshi, Daito-shi Osaka (JP)
(74) Representative: Grünecker, Kinkeldey, Stockmair & Schwanhäusser Anwaltssozietät

(57) **Abstract**

In a television receiver (1) with an optical disk reproducing function, when reproduction of an optical disk ends and stops in an optical disk reproducing part (2) and a screen saver operates, a main control part (15) detects the operation of the screen saver and counts up a timer. When an operation input is not done for a predetermined time period, control is performed so as to stop electric power supply to the optical disk reproducing part (2). Then, when a power source of the optical disk reproducing part is stopped, the main control part (15) stops power supply to the other parts of the receiver and the receiver shifts to a wait state.

## Description

### BACKGROUND OF THE INVENTION

### 1. Field of the Invention

This invention relates to a television receiver equipped with a function of reproducing an optical disk such as a DVD.

### 2. Description of the Related Art

A television receiver with an optical disk reproducing function is an apparatus in which a broadcast signal reproducing part for receiving and reproducing a television broadcast signal, an optical disk reproducing part for setting an optical disk and reading out and reproducing video and sound data recorded on the optical disk, and a display screen and a speaker for outputting video and sound reproduced in any of these two reproducing parts are incorporated into an integral cabinet.

In this television receiver with the optical disk reproducing function, when a user makes a selection so as to view a television broadcast using a remote control unit, etc., the broadcast signal reproducing part extracts and demodulates a broadcast signal of a selected channel and projects the video on the display screen and outputs the sound from the speaker.

On the other hand, when a user sets the optical disk in a predetermined position and makes a selection so as to reproduce the video and sound data recorded on the optical disk using the remote control unit, etc., the optical disk reproducing part reads out and decodes the video and sound data and thereby reproduces the data to video and sound of a predetermined format and outputs the video on the display screen and outputs the sound from the speaker.

At this time, switching of the reproducing part for outputting video and sound is performed by a control part of the broadcast signal reproducing part, and when the optical disk reproducing operation described above is inputted, an output source of the video and sound are switched from the broadcast signal reproducing part to the optical disk reproducing part. Also, when the user performs an operation for selecting a predetermined channel of a television broadcast using the remote control unit, etc., during optical disk reproduction, the control part of the broadcast signal reproducing part receives and demodulates a broadcast signal of the selected channel and also switches an output source to the broadcast signal reproducing part. In this case, the control part of the broadcast signal reproducing part performs control so as to stop the disk reproduction with respect to the optical disk reproducing part.

In such a television receiver with the optical disk reproducing function, when the user stops or pauses the disk reproducing operation using the remote control unit, the video is not outputted on the display screen unless a switching operation of the output source is performed by the remote control unit. However, even in this state, a power source is supplied to each operation part, so that useless electric power is consumed.

As a result of this, in the conventional television receiver with the optical disk reproducing function, there is means in which when disk reproduction has stopped or paused with an optical disk set in an optical disk reproducing part, it is monitored whether or not a reproducing operation is inputted and when the input is not done for a predetermined time period, an automatic power source stop function of stopping a power source of the optical disk reproducing part is provided (for example, see JP-A-11-4390).

Also, there is means in which when disk reproduction has stopped or paused in an optical disk reproducing part, a screen saver is operated and when a reproducing operation input is not done for a predetermined time period, a power source of the optical disk reproducing part is stopped (for example, see JP-A-2001-176349).

Also, there is an receiver in which an optical disk reproducing part itself is provided with the automatic power source stop function described above. In this receiver, there is also means in which when a reproduction stop state continues in the optical disk reproducing part for a predetermined time period regardless of an operation froma control part of abroadcast signal reproducing part, a power source of this optical disk reproducing part is stopped.

However, in each television receiver with the optical disk reproducing function described above, in the case of shifting to a reproduction stop state of the disk, a power source of the optical disk reproducing part stops, but a power source of the whole receiver does not stop. That is, electric power is continuously supplied to the other parts such as the broadcast signal reproducing part and unless a switching operation of the output source is performed, no video is displayed on the display screen. As a result of this, a power source stop operation had to be performed again in order to stop the power source of the receiver.

Also, in the case that the optical disk reproducing part independently has the automatic power source stop function described above, the control part of the broadcast signal reproducing part monitors an action state of the optical disk reproducing part, so that when the optical disk reproducing part stops a power source independently, it is decided that an abnormal action occurs, and the power source of the receiver is stopped immediately. In this case, at the time of the first restart since this occurrence, only a power source input operation could be performed, for example, a removal operation of the disk could not be performed in this state. Further, since the fact that the previous end (power source stop) was an abnormal end is outputted to the display screen, a complicated operation for having to check this abnormal end and return to a normal action, etc., had to be performed when the user restarts.

### SUMMARY OF THE INVENTION

Therefore, an object of the invention is to provide a television receiver with an optical disk reproducing function capable of making automatic power source stops of not only a disk reproducing part but also the receiver when the disk reproducing part is selected as a video and sound output source and disk reproduction is in a stop state.

A television receiver with an optical disk reproducing function of the invention is characterized in that an optical disk reproduction means comprises disk control means for starting a screen saver when reproduction of an optical disk stops, and a broadcast signal reproduction means comprises main control means for making control to reproduce a broadcast signal or controlling the disk control means to reproduce the optical disk based on an operation input, and when the operation input is not done for a predetermined time period with the screen saver operating, the main control means makes the disk control means to stop the screen saver, performs control of stopping a power source supply to the optical disk reproducing means and also performs control of stopping a power source supply to the receiver.

In this configuration, when a reproduction action of the disk stops with the disk set in the optical disk reproducing means and the operation input is not done for a predetermined time period with the screen saver operating, control is performed so that a power source supply to the receiver stops by the main control means. As a result of this, the amount of electric power equal to that at the time of viewing can be prevented from being consumed while being in a state in which video is not outputted to a display screen and sound is not outputted to a speaker. Further, a power source operation of the optical disk reproducing part can be controlled by the main control means, so that the decision that an abnormal power source stop is made at the time of a power source stop of the optical disk reproducing part as described above can be prevented.

Also, it is characterized in that the main control means of the television receiver with the optical disk reproducing function of the invention performs control so as to stop a power source supply to the receiver after a predetermined time since a power source supply to the optical disk reproducing means is stopped.

In this configuration, the optical disk reproducing part differs from the other parts in timing of a power source stop and thereby, for example, it is unnecessary to make a power source stop concurrently with a part such as a CRT in which the amount of power consumption is large, so that an increase in a load at the time of a stop in a power source part can be suppressed.

Also, it is characterized in that the disk control means of the television receiver with the optical disk reproducing function of the invention comprises means for setting and storing whether or not an automatic power source stop function of stopping the screen saver and stopping a power source supply to the optical disk reproducing means when an operation input is not done for a predetermined time period with the screen saver operating is made valid, and the main control means performs control so that it is detected whether or not the automatic power source stop function is valid from the disk control means and in only the valid case, the automatic power source stop function is performed.

In this configuration, when a user makes the automatic power source stop function invalid, the automatic power source stop operation described above is not performed and the screen saver continues operating in a disk reproduction stop state. By being configured thus, a power source of the whole receiver can be prevented from stopping automatically without user's intent.

### BRIEF DESCRIPTION OF THE DRAWINGS

Fig. 1 is a block diagram showing a main part of a television receiver with an optical disk reproducing function according to an embodiment of the invention; and
Fig. 2 is a flowchart showing an action flow in a main control part at the time of power source control of an optical disk reproducing part.

### DETAILED DESCRIPTION OF THE PREFFERED EMBODIMENTS

A television receiver with an optical disk reproducing function according to an embodiment of the invention will be described with reference to the drawings.

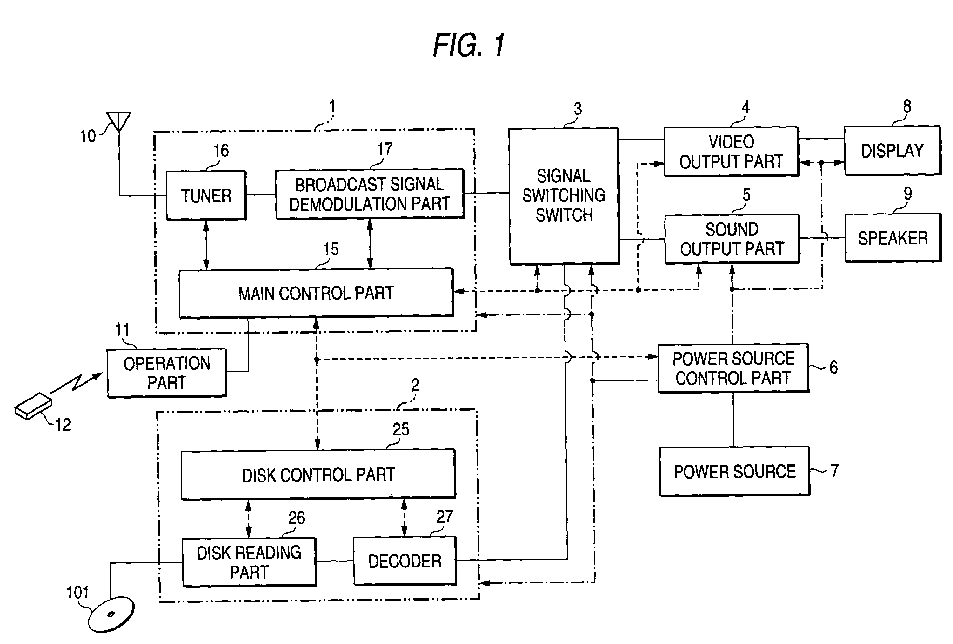

Fig. 1 is a block diagram showing a main part of a television receiver with an optical disk reproducing function according to the present embodiment.

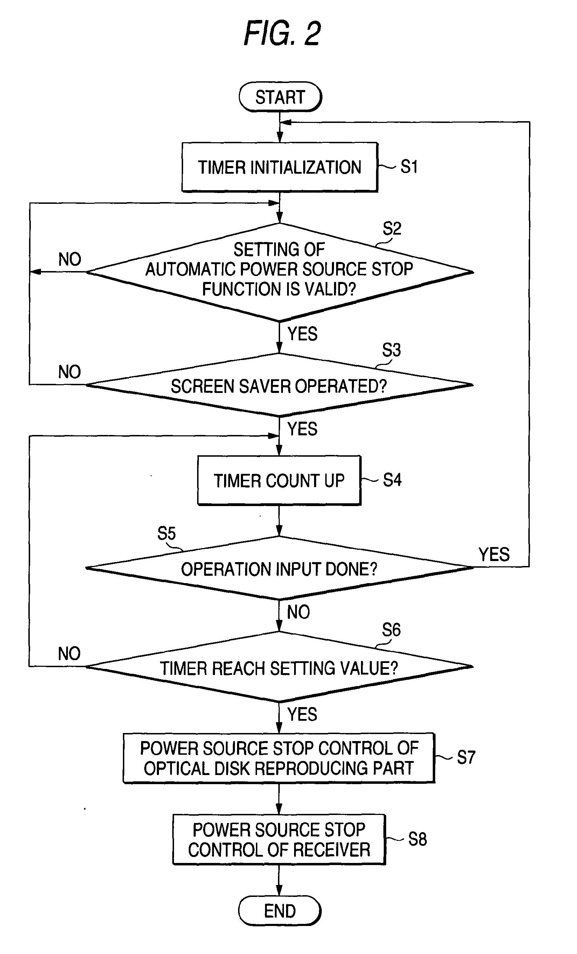

Fig. 2 is a flowchart showing an action of a main control part at the time of an action of an automatic stop function.

As shown in Fig. 1, the television receiver with the optical disk reproducing function includes a broadcast signal reproducing part 1, an optical disk reproducing part 2, a signal switching switch circuit 3, a video output part 4, a sound output part 5, a power source control part 6, a power source 7, a display 8, a speaker 9, an operation part 11, and a remote control unit 12.

The broadcast signal reproducing part 1 includes a tuner 16 for extracting only a broadcast signal of a selected channel among received television broadcast signals, a broadcast signal demodulation part 17 for demodulating the broadcast signal of the selected channel thus extracted to predetermined video signal and sound signal, and a main control part 15 for controlling these tuner 16 and broadcast signal demodulation part 17. An antenna 10 is connected to the tuner 16.

The optical disk reproducing part 2 includes a disk reading part 26 for loading an optical disk 101 such as a DVD and reading out digital data recorded on the optical disk 101, a decoder 27 for decoding the read digital data into video and sound data of a predetermined format and further converting the digital data into a video signal and a sound signal, and a disk control part 25 for controlling these disk reading part 26 and decoder 27.

The main control part 15 is connected to the operation part 11, and controls the disk control part 25 of the optical disk reproducing part 2, the signal switching switch 3, the video output part 4, the sound output part 5 and the power source control part 6 based on an operation command inputted by a user using the operation part 11 and the remote control unit 12.

The power source control part 6 controls electric power supply from the power source 7 to each part of the receiver based on a power source control command from the main control part 15.

Next, an action of this television receiver with the optical disk reproducing function will be described.

### (1) Case of viewing program of television broadcast

When the user selects a predetermined channel using the operation part 11 or the remote control unit 12, a channel selection command is inputted to the main control part 15. The main control part 15 performs control so as to extract the selected channel with respect to the tuner 16 based on this channel selection signal, and also controls the signal switching switch 3 so as to select the broadcast signal demodulation part 17 of the broadcast signal reproducing part 1 as an output source of a video signal and a sound signal. Also, the main control part 15 performs control so as to stop power source supply of the optical disk reproducing part 2 with respect to the power source control part 6.

The tuner 16 extracts a broadcast signal of the selected channel among received television broadcast signals, and outputs the broadcast signal to the broadcast signal demodulation part 17. The broadcast signal demodulation part 17 demodulates the inputted broadcast signal, and generates a video signal and a sound signal, and outputs the signals to the signal switching switch 3. The signal switching switch 3 separates the video signal and the sound signal, and outputs the video signal to the video output part 4 and outputs the sound signal to the sound output part 5. Then, the video output part 4 converts the inputted video signal into a signal according to specifications of the display 8, for example, an RGB signal when the display 8 is a CRT, and outputs the signal to the display 8. The display 8 receives this signal and proj ects predetermined video on a display screen. On the other hand, the sound output part 5 performs sound volume control, etc., with respect to the inputted sound signal, and outputs the signal to the speaker 9. The speaker 9 receives this sound signal and outputs sound to the outside. Incidentally, with respect to a change in setting of the video output part 4 and the sound output part 5, the user does input using the remote control unit 12 or the operation part 11 and the main control part 15 performs control so as to shift to the selected setting.

### (2) Case of reproducing optical disk and viewing video and sound

When the optical disk 101 in which data is recorded on a disk surface in a predetermined format is held in the optical disk reproducing part 2 and the user performs a reproduction operation using the remote control unit 12, etc., an optical disk reproduction command is inputted to the main control part 15. The main control part 15 performs control so as to reproduce a video signal and a sound signal from the data recorded on the optical disk 101 with respect to the disk control part 25. Also, the main control part 15 controls the signal switching switch 3 so as to select the decoder 27 of the optical disk reproducing part 2 as the output source of the video signal and the sound signal.

The disk control part 25 receives the optical disk reproduction command, and performs control so as to read the data recorded on the optical disk 101 with respect to the disk reading part 26. The disk reading part 26 rotates a spindle motor and also moves an optical pickup reading part in a predetermined position, and reads out the data as an optical signal, and converts the data into digital data of a predetermined format (for example, an MPEG2 format). This digital data is outputted from the disk reading part 26 to the decoder 27, and is decoded into a video signal and a sound signal of a predetermined format by the decoder 27, and is outputted to the signal switching switch 3. Since actions of the signal switching switch 3, the video output part 4 and the sound output part 5 are the same as those of the case of the television broadcast signal described above, the description is omitted.

Next, an action at the time of starting the present receiver will be described.

When the user performs a power source input operation using the operation part 11 or the remote control unit 12 in a wait state in which electric power is supplied to only the main control part 15 (hereinafter simply called "a wait state"), the main control part 15 performs control so as to supply electric power to necessary parts inside the apparatus with respect to the power source control part 6. In the case of being in a state of viewing a television broadcast at a point in time of performing the previous power source stop operation, the main control part 15 performs control so as to reproduce a broadcast signal of the channel at a point in time of the power source stop, and also controls the power source control part 6 so as to stop electric power supply to the optical disk reproducing part 2.

On the other hand, in the case of viewing video and sound from an optical disk at a point in time of the previous power source stop, the main control part 15 performs control so that the optical disk reproducing part 2 becomes the output source of video and sound. In this state, the optical disk is not reproduced, so that video is not outputted to the display 8. When the user performs an optical disk reproducing operation, the optical disk reproducing part 2 performs optical disk reproduction by the method described above and outputs the video and sound to the display 8 and the speaker 9.

Such a television receiver with the optical disk reproducing function has an automatic power source stop function of shifting the apparatus to a wait state after a predetermined time period when a television broadcast is not received while a mode of reproducing a television broadcast signal is selected.

This automatic power source stop function is a function in which a video synchronous signal of the received television broadcast signal is monitored by the main control part 15 and when the video synchronous signal is not detected and an operation input is not done for a predetermined time period, power source control is performed so as to end reception of the television broadcast and shift to the wait state.

Next, in such a television receiver with the optical disk reproducing function, power source control in a state in which reproduction of an optical disk ends and stops will be described with reference to a flowchart of Fig. 2.

Incidentally, it can be selected whether the automatic power source stop function of performing stop control of a power source automatically at the time of a stop of optical disk reproduction is made valid or invalid, and setting of validity/invalidity of the automatic power source stop function is stored in a storage part provided in the disk control part 25. Also, screen saver video data and setting as to whether a screen saver function is made valid or invalid are stored in this storage part, and a screen saver operates only when the screen saver function is selected as valid.

The main control part 15 is provided with a timer, and the timer is set to a predetermined initial value as an initial state (S1). Also, the main control part 15 detects an item of setting of validity/invalidity of the automatic power source stop function stored in the storage part of the disk control part 25 and in the case of validity (S2), an operation of the screen saver is monitored.

When the optical disk reproduction ends and stops, the disk control part 25 detects a stop of the disk reading part 26 and when the screen saver function is set as validity, the screen saver video data previously stored in the storage part is read out and is outputted to the signal switching switch 3 through the decoder 27. The signal switching switch 3 outputs this screen saver video signal to the video output part 4, and the video output part 4 outputs this signal to the display 8. By operating the screen saver, the fact that the reproduction has stopped is displayed while preventing burn-in of the display 8. Concurrently with this, the main control part 15 detects that the screen saver has started from the disk control part 25 (S3), and count of the attached timer is started (S4). When the user inputs some operation command excluding a power source stop command using the remote control unit 12 or the operation part 11 in this state, the main control part 15 resets the timer and returns the timer to the initial state, and also controls the disk control part 25 so as to release a screen saver output state (S5).

On the other hand, when an operation command input is not done for a predetermined time period (preset count time period) from the remote control unit 12, etc., (S5 -> S6), the main control part 15 performs control so as to stop an output of the screen saver with respect to the disk reproducing part 25, and also performs control so as to stop power source supply to the optical disk reproducing part 2 with respect to the power source control part 6 (S7).

Next, the main control part 15 detects that a power source stop of the optical disk reproducing part 2 has been completed, and controls the power source control part 6 so as to stop electric power supply to parts other than the optical disk reproducing part 2 (S8). The power source control part 6 receives this control command, and stops electric power supply to each part excluding the main control part 15 from the power source 7, and shifts to a wait state.

Incidentally, in the description mentioned above, the case that reproduction of the optical disk stops normally has been described, but in the case that a power source of the optical disk reproducing part 2 stops automatically due to some abnormality, the main control part 15 detects this fact and stops electric power supply to the other parts of the receiver and performs control to a wait state. In this case, the main control part 15 is set so as to accept only a power source input operation and when a starting operation is inputted from the wait state, control is performed so as to output "Caution image" indicating that the previous end was an abnormal stop to the display 8. As a result of this, the user can check whether the previous power source stop is normal or abnormal.

Also, validity/invalidity of the automatic power source stop function and validity/invalidity of the screen saver function can be set by the user and thereby, for example, when the user does not want to operate an automatic power source stop or a screen saver for some reason, this operation can be limited.

Also, in the description mentioned above, the case that reproduction of the optical disk stops and no output is done on the display 8 has been described, but in the case that there is a menu image by a program recorded on the optical disk, a screen saver can also be started after a lapse of a predetermined time period with the menu image outputted. Also in this case, the automatic power source stop function described above can be applied.

By such a configuration, even when reproduction of the optical disk is not performed with the optical disk reproducing part selected as the output source of video and sound, electric power supply can automatically be stopped to shift the receiver to a wait state, so that consumption of useless electric power can be prevented.

Also, by stopping electric power supply to the other parts after stopping electric power supply to the optical disk reproducing part, a change in the amount of instantaneous electric power in a power source part can be reduced, so that a load to the power source part can be suppressed.

Also, since electric power supply of the optical disk reproducing part can be controlled by the main control part, occurrence of a disadvantage of the case of the conventional example in which a power source of the optical disk reproducing part automatically stops independently can be suppressed, and it is unnecessary for a user to perform a complicated operation at the time of a restart as described in the above-mentioned object. Also, when a disadvantage occurs in the optical disk reproducing part and a power source of the optical disk reproducing part stops actually, an abnormal stop is detected by the main control part, so that a situation in which a normal automatic power source stop state is misidentified as an abnormal power source stop state as described above is eliminated.

According to a television receiver with an optical disk reproducing function of the invention, in the case that a television broadcast reproducing part is selected as a video and sound output source, a power source stop can be made automatically when a video synchronous signal is not detected and an operation input is not done for a predetermined time, and in the case that an optical disk reproducing part is selected as the video and sound output source, a power source stop can be made automatically when an operation input is not done for a predetermined time period while detecting an operating state of a screen saver. As a result of this, in a state in which video and sound are not outputted, electric power can be prevented frombeing suppliedto eachpart of the receiver andbeing consumed.

Also, according to a television receiver with an optical disk reproducing function of the invention, a rapid increase in a load in a power source part at the time of a power source stop can be suppressed by sequentially stopping power sources of the other parts after stopping a power source of an optical disk reproducing part.

Also, according to a television receiver with an optical disk reproducing function of the invention, control of an automatic power source stop of an optical disk reproducing part is performed by a main control part, so that the apparatus can be restarted by a normal starting operation unlike a restarting operation and a power source stop at the time of abnormality due to some failure in the receiver. As a result of this, a television receiver with an optical disk reproducing function having excellent operability can be constructed.

## Claims

1. A television receiver with an optical disk reproducing function, comprising:
a body;
broadcast signal reproducing means for receiving and reproducing a broadcast signal; and
optical disk reproducing means for reading out and reproducing video and sound data recorded on an optical disk;
wherein the television receiver reproduces either the broadcast signal or the video and sound data recorded on the optical disk based on an operation input to the body and outputs video and sound;
the optical disk reproducing means comprises disk control means for starting a screen saver when reproduction of the optical disk stops;
the broadcast signal reproducing means comprises main control means for making control to reproduce the broadcast signal or controlling the disk control means to reproduce the optical disk, based on the operation input;
the disk control means comprises means for setting and storing an automatic power source stop function of stopping the screen saver and stopping a power source supply to the optical disk reproducing means when the operation input is not done for a predetermined time period with the screen saver operating; and
the main control means detects whether or not the automatic power source stop function is valid from the disk control means, and when the function is valid and the operation input is not done for the predetermined time period with the screen saver operating, the main control means makes the disk control means to stop the screen saver and stops the power source supply to the optical disk reproducing means, and thereafter the main control means stops a power source supply to the receiver.

2. A television receiver with an optical disk reproducing function, comprising:
a body;
broadcast signal reproducing means for receiving and reproducing a broadcast signal; and
optical disk reproducing means for reading out and reproducing video and sound data recorded on an optical disk;
wherein the television receiver reproduces either the broadcast signal or the video and sound data recorded on the optical disk based on an operation input to the body and outputs video and sound;
the optical disk reproducing means comprises disk control means for starting a screen saver when reproduction of the optical disk stops;
the broadcast signal reproducing means comprises main control means for making control to reproduce the broadcast signal or controlling the disk control means to reproduce the optical disk, based on the operation input; and
when the operation input is not done for a predetermined time period with the screen saver operating, the main control means makes the disk control means to stop the screen saver and stops a power source supply to the optical disk reproducing means, and stops a power source supply to the receiver.

3. The television receiver with an optical disk reproducing function as claimed in claim 2, wherein the main control means stops the power source supply to the receiver after a predetermined time since the power source supply to the optical disk reproducing means is stopped.

4. The television receiver with an optical disk reproducing function as claimed in claim 2 or 3, wherein the disk control means comprises means for setting and storing an automatic power source stop function of stopping the screen saver and stopping the power source supply to the optical disk reproducing means when the operation input is not done for a predetermined time period with the screen saver operating; and
the main control means detects whether or not the automatic power source stop function is valid from the disk control means, and in only the valid case, the automatic power source stop function is performed.
